# EUROPEAN PATENT SPECIFICATION

(11) **EP 1 847 429 B1**
(45) Date of publication and mention of the grant of the patent: **14.11.2012**
(21) Application number: 06008206.2
(22) Date of filing: 20.04.2006
(51) Int. Cl.: B62K 5/02, B60T 8/1755

(54) **Straddle-type three-wheeled vehicle**
Grätschsitz-Fahrzeug mit drei Rädern
Véhicule de type à enfourcher à trois roues

(43) Date of publication of application: 24.10.2007
(73) Proprietor: Bombardier Recreational Products Inc., Valcourt, Québec J0E 2L0 (CA)
(72) Inventor: Dagenais, Mario, Lac Brome, Quebec J0E 1R0 (CA); Mercier, Daniel, Magog, Quebec J1X 3J9 (CA)
(74) Representative: Patentanwälte Dr. Solf & Zapf

(56) References cited:
- EP-A- 1 419 951
- EP-A2- 1 277 635
- US-A1- 2003 102 694
- US-A1- 2004 098 185
- US-A1- 2004 251 093
- US-B1- 6 424 907

## Description

### FIELD OF THE INVENTION

The present invention relates to straddle-type three-wheeled vehicle.

### BACKGROUND OF THE INVENTION

Motorized three-wheeled vehicles are well known in the art. Such vehicles are typically off-road type or all-terrain vehicles (also known as "ATVs"). Two different configurations of three-wheeled vehicles are generally known. The first configuration has one wheel at the front and two wheels at the back of the vehicle. The second configuration has two wheels at the front and one wheel at the back.

Regardless of the particular configuration of the three-wheeled vehicle, those skilled in the art recognize that three-wheeled vehicles are intrinsically less stable than four-wheeled vehicles, such as automobiles. Several factors contribute to this instability. For comparable wheelbase, wheeltrack and center of gravity (CG) position, the rollover axes of the three-wheeled vehicle are closer to the CG than they are for a four-wheeled vehicle.

It should be noted at the outset that the lower stability of a three-wheeled vehicle versus a four-wheeled vehicle should not be understood to mean that a three-wheeled vehicle is unstable to the point that it is dangerous to a user. To the contrary, as would be understood by those skilled in the art, some designs of three-wheeled vehicles are inherently very stable and can even advantageously be compared to some four-wheeled vehicles.

Another factor that affects the stability of a vehicle is the center of gravity of the vehicle. The height of the center of gravity of a vehicle is measured as a distance from the ground when the vehicle is at rest. The center of gravity changes based on the rider position and the type of seating arrangement provided.

A straddle seat type vehicle positions the rider higher from the ground and, as a result, typically creates a vehicle with a higher center of gravity than a vehicle that has a recumbent type seat, which may be more stable but requires additional space and have a different weight distribution since the rider cannot be superposed over the engine. Recumbent seat configurations generally position two riders side by side.

While straddle seats may alter disadvantageously the center of gravity of a vehicle, they offer certain advantages that are not available with recumbent seats. In particular, straddle seats allow a more compact riding position, allow a better vision since the driver is higher, make the rider more visible, and permit the rider to lean into a turn for enhanced handling. Straddle seats also may provide a second passenger seat behind the driver seat, if desired, but the additional rider also tends to raise the center of gravity of the vehicle.

An advantage of a tandem straddle-type vehicle is that the center of gravity of the vehicle remains laterally symmetrically positioned if there are one or more riders. In contrast, on a recumbent three-wheeler, when only the driver is present the center of gravity is not located in the same lateral position as when there are two riders in the vehicle. When only a driver is present in a three-wheeled vehicle with recumbent seats, the center of gravity will be offset from the longitudinal centerline of the vehicle in a direction towards the driver. As would be appreciated by those skilled in the art, this offset may have an effect on the handling performance of the recumbent-seated vehicle.

Other factors that affect stability include the distance between the tires. On a vehicle, the wheel base refers to the distance between the front tire(s) and the rear tire(s). The wheel track, on the other hand, refers to the distance between two tires on the same axle. A larger distance between the tires (whether it be the wheel base or the wheel track) enhances the stability of the vehicle, but creates a larger vehicle, in terms of overall length and/or width (as the case may be), which may be less maneuverable because of the vehicle's increased size.

When operating any vehicle, especially a three-wheeled vehicle, stability is a concern during turning. When negotiating a curve, a vehicle is subject to centrifugal forces, as is readily understood by those of ordinary skill in the art of vehicle design. Generally, a higher center of gravity causes the vehicle to have a lower wheel lift threshold with respect to centrifugal forces than a vehicle with a lower center of gravity.

Three-wheeled vehicles raise special stability concerns since there is a smaller total tire contact area with the ground as compared with similarly sized four-wheeled vehicles. Usually three-wheeled vehicles have a smaller weight and therefore they are more sensitive to variations in loading, particularly driver, passenger and cargo weight. Moreover, if a straddle seat is employed, the center of gravity can be relatively high as compared with that of a recumbent three-wheeled vehicle.

To equip a three-wheeled vehicle for road use, road tires must be employed. At high speeds or in sharp turns, the centrifugal forces generated on a road may, under certain conditions, exceed the traction threshold of a road tire, which could cause one or more of the tires to slip on the road surface. The slippage may be so severe that the vehicle could oversteer or understeer under certain circumstances.

As would be appreciated by those skilled in the art, modem road tires can offer considerable grip on a road surface. The gripping force of modem road tires can be so strong, in fact, that a vehicle with a high center of gravity may, under certain conditions, be subjected to forces that may cause the vehicle to exceed its wheel lift threshold. If the wheel lift threshold is exceeded, one or more of the vehicle's wheels on the inner side of the curve may lift off of the road surface. Under such circumstances, if the rider continues to apply a lateral acceleration to the vehicle, the vehicle may rollover. Tripped rollover can also be experienced under severe oversteering conditions if the tires suddenly recover traction with the ground or hit an obstacle side ways.

Electronic stability systems (ESS), also known as vehicle stability systems (VSS), are designed to electronically manage different systems on an automotive vehicle to influence and control the vehicle's behavior. An ESS can manage a considerable number of parameters at the same time. This provides an advantage over an automotive vehicle merely operated by a person since the driver can only manage a limited number of parameters at the same time. A typical ESS takes several inputs from the vehicle and applies different outputs to the vehicle to influence the vehicle's behavior. Examples of inputs include steering column rotation, the longitudinal and transverse acceleration of the vehicle, the engine output, the detection of the presence (or absence) of a rider and a passenger, the speed of the four wheels, the brake pressure in the wheel's brakes, the yaw rate, and the yaw rate angle. Traditional ESSs use inputs from all four wheels (on a four wheel vehicle). Some low-cost systems use reduced inputs, but this does not result in optimal behavior interpretation. Inputs from suspension displacement, brake and accelerator pedals displacement can also be provided to the ESS.

The outputs from the ESS affect an automobile's behavior by generally independently managing the brakes on each wheel, the suspension, and the power output of the engine in order to improve the automobile's handling under certain circumstances. Since ESSs have been specifically developed for four-wheeled vehicles and rely on inputs provided by a four-wheeled vehicle, it is time consuming to adapt this kind of system to a three-wheeled vehicle. This is especially true since an ESS typically uses inputs from each of the four wheels independently and uses the braking system independently on all of the wheels.

A three-wheeled vehicle configured with a single wheel at one end of the vehicle does not provide all the information/data input required by a four-wheeled vehicle ESS. For example in a two front wheels, one rear wheel configuration, there is only one rear wheel from which the ESS can receive input on speed. Typically, on a vehicle having four wheels, when the brake is applied to one of the rear wheels, a yaw moment is generated about a vertical axis passing through the center of gravity of the vehicle. On a vehicle having only one rear wheel, the rear wheel is positioned in the same plane as the longitudinal axis of the vehicle, which makes it difficult to generate any significant yaw moment by applying the brake to the rear wheel.

Furthermore, to date, few three-wheeled vehicles have been produced commercially for road use. Therefore, it is difficult to determine the preferred settings of drivers of such vehicles. This is especially true for a three-wheeled vehicle having a straddle seat. Some people may consider this type of vehicle to be a hybrid between a motorcycle, which typically has a hand actuated brake, and an automobile, which usually has a foot actuated brake. Therefore, on a three-wheeled vehicle having a straddle seat, different people may have different preferences when it comes to the type of actuation for the brakes. Thus, this creates a difference in the design of the braking system.

One example of a three-wheeled vehicle is illustrated in United States published patent publication US 2004/0035624 A1. This vehicle has a straddle type seat, two front wheels, and one rear wheel. A foot brake pedal is used to control the braking of both the front wheels and the rear wheel, but, according to the description, preferably only the braking of the rear wheel. A hand brake lever is provided to control the braking of both the front wheels and the rear wheel. However, in this arrangement, the hand brake always applies the same amount of braking to the two front wheels, which may cause the vehicle to become unstable under certain conditions. Also, in this arrangement, since the driver is responsible for maintaining the stability of vehicle, the vehicle may become unstable beyond the wheel lift threshold before the driver reacts to the instability. Finally, in the case where the foot brake pedal is used to control only the braking of the rear wheel, actuating the foot brake pedal would not apply a braking force capable of correcting an instability of the vehicle since it would not create a significant yaw moment.

US 2003/102694 A1 discloses a vehicle comprising a hand brake lever and a foot pedal, wherein both, the handbrake leaver and the foot pedal actuate a master cylinder.

EP 1 419 951 A1 discloses a vehicle which has an electronic brake control unit, wherein it has only a single brake lever.

US 2004/251093 A1 discloses a three-wheel vehicle having front and rear brakes and a hand brake lever and a brake pedal.

EP 1 277 635 A2 concerns brake control methods and apparatus for motorcycles. However, EP 1 277 635 A2 neither discloses nor mentions a motorcycle comprising three wheels. EP 1 277 635 A2 discloses front and rear brakes as well as first and second hydraulic brake actuators and a hand lever and a pedal for actuating the brakes.

Therefore, there is a need to provide a straddle-type three-wheeled vehicle comprising a braking system that can function with an ESS.

### STATEMENT OF THE INVENTION

The invention provides a straddle-type three-wheeled vehicle according to claim 1.

Especially, the invention provides a straddle-type three-wheeled vehicle having a frame, a straddle seat mounted to the frame, a first wheel mounted to the frame near a first end thereof, a second wheel mounted to the frame near a second end thereof, a third wheel mounted to the frame near the first end thereof, a steering assembly mounted to the frame forwardly of the straddle seat for steering at least one of the wheels, an engine mounted to the frame for providing power to at least one of the wheels, a first brake for braking the first wheel, a second brake for braking the second wheel, a third brake for braking the third wheel, a first hydraulic brake actuator, a first brake lever for actuating the first hydraulic brake actuator, a second hydraulic brake actuator, and a second brake lever for actuating the second hydraulic brake actuator. The vehicle also has an electronic brake control unit in operative communication with the first brake, in separate operative communication with the second brake and in separate operative communication with the third brake, and a sensor for sensing an operating condition of the vehicle and in operative connection with the electronic brake control unit for sending an operating condition signal to the electronic brake control unit. The first hydraulic brake actuator hydraulically communicates with the electronic brake control unit. The second hydraulic brake actuator hydraulically communicates with the electronic brake control unit. The first hydraulic brake actuator hydraulically actuates the first brake through the electronic brake control unit in response to actuation of the first brake lever. The second hydraulic brake actuator hydraulically actuates the second brake through the electronic brake control unit in response to actuation of the second brake lever. The first hydraulic brake actuator hydraulically actuates the third brake through the electronic brake control unit in response to actuation of the first brake lever. The electronic brake control unit selectively actuates the first, second and third brakes in response to the operating condition signal independently of actuation of first and second hydraulic brake actuators. The electronic brake control unit also selectively controls actuation of the first, second and third brakes in response to actuation of either of the first and second hydraulic brake actuators and the operating condition signal, wherein, of the first and second hydraulic brake actuators, the first brake lever only actuates the first hydraulic brake actuator and the second brake lever only actuates the second hydraulic brake actuator.

For purposes of this application, terms used to locate elements on the vehicle, such as "front", "back", "rear", "left", "right", "up", "down", "above", and "below", are as they would normally be understood by a rider of the vehicle sitting on the vehicle in a forwardly facing, driving position. The term "longitudinal" means extending from the front to the back. The term "brake lever" refers to the device through which a driver of the vehicle applies braking, such as, for example, a hand or foot brake lever, a handle, or a brake pedal. A "hand brake lever" is a brake lever that is normally actuated by a driver's hand. Similarly, a "foot brake lever" is a brake lever that is normally actuated by a driver's foot.

### BRIEF DESCRIPTION OF THE DRAWINGS

For a better understanding of the present invention, as well as other aspects and further features thereof, reference is made to the following description which is to be used in conjunction with the accompanying drawings, where:

Fig. 1 is a perspective view, taken from a rear, left side, of a vehicle in accordance with the present invention;

Fig. 2 is a top view of the vehicle of Fig. 1;

Fig. 3 is front view of the vehicle of Fig. 1;

Fig. 4 is a back view of the vehicle of Fig. 1;

Fig. 5 is a left side elevation view of the vehicle of Fig. 1;

Fig. 6A is a right side elevation view of the vehicle of Fig. 1;

Fig. 6B is a close-up view of the section identified in Fig. 6A;

Fig. 7A is a right side elevation view of a frame of the vehicle of Fig. 1 with the steering and braking components attached thereto;

Fig. 7B is a close-up view of the section identified in Fig. 7A;

Fig. 8 is a schematic force diagram of the vehicle of Fig. 1 with a braking force applied to the front left wheel;

Fig. 9 is a schematic force diagram of the vehicle of Fig. 1 with a braking force applied to the front right wheel;

Fig. 10 is a schematic force diagram of the vehicle of Fig. 1 with a braking force applied to the rear wheel;

Fig. 11 is a schematic force diagram of the vehicle of Fig. 1 with a braking force applied to counteract the effects of a left turn on the vehicle;

Fig. 12 is a schematic, only exemplary representation of a first embodiment not embodying the principles of the invention of a braking system to be used with the vehicle of Fig. 1;

Fig. 13 is a further schematic, only exemplary representation of a second embodiment not embodying the principles of the invention of a braking system to be used with the vehicle of Fig. 1; and

Fig. 14 is a schematic representation of an embodiment embodying the principles of the invention of a braking system to be used with the vehicle of Fig. 1.

### DETAILED DESCRIPTION OF THE INVENTION

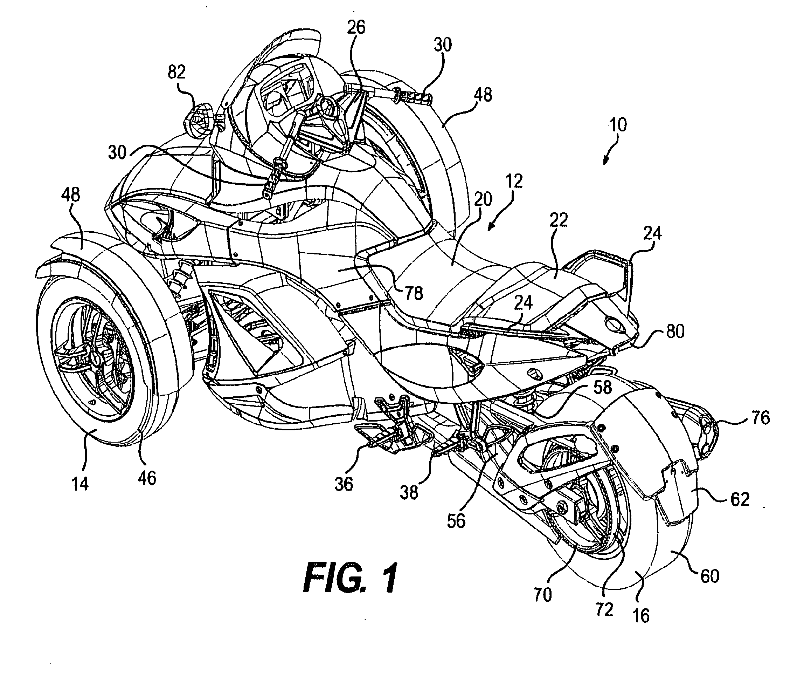

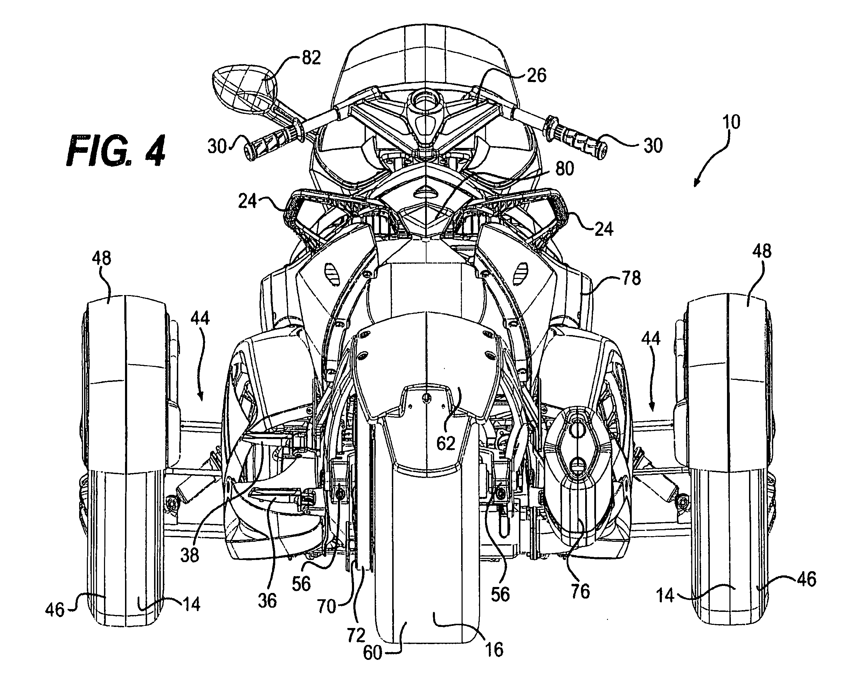

The present invention will be described herein with respect to a vehicle 10 having a straddle seat 12, two front wheels 14, and one rear wheel 16, as illustrated in Figs. 1 to 6A. However, it is contemplated that the vehicle 10 could also have one front wheel and two rear wheels.

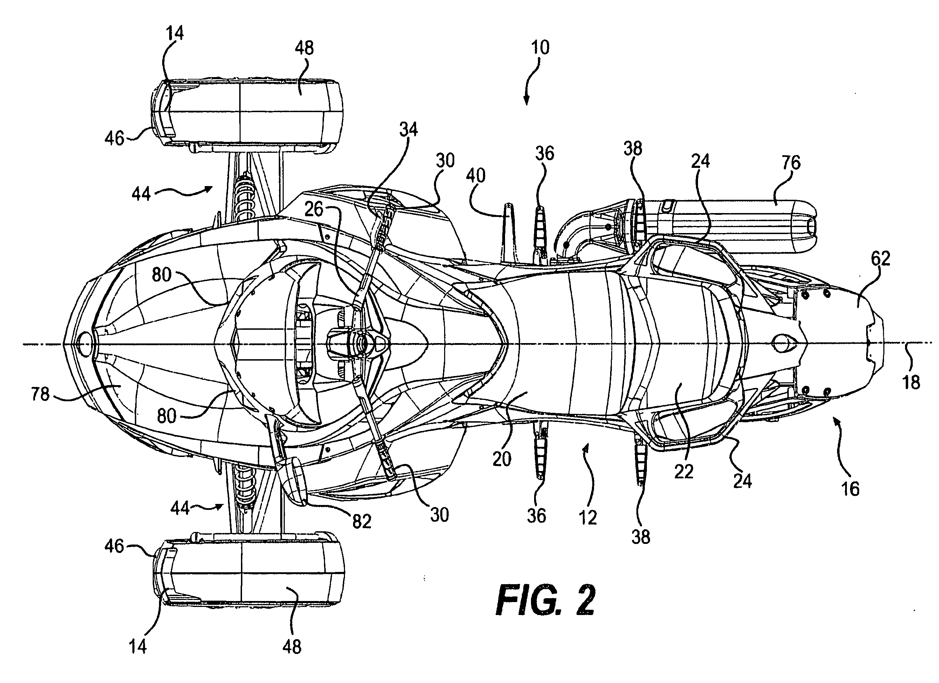

As seen in Figs. 1 to 6A, the vehicle 10 has a straddle seat 12 located at least partially rearwardly of a center of the vehicle 10 and disposed along the longitudinal centerline 18 (Fig. 2) thereof. The straddle seat 12 has a first portion 20 for accommodating a driver, and a second portion 22 for accommodating a passenger behind the driver. The second portion 22 is higher than the first portion 20 to permit the passenger to see in front of the vehicle 10 over the driver. A pair of handles 24 are provided on either sides of the second portion 22 for the passenger to hold onto. It is contemplated that the straddle seat 12 could be disposed at a different longitudinal location depending on the particular ergonomics of the vehicle 10. It is also contemplated that the straddle seat 12 could only have the first portion 20.

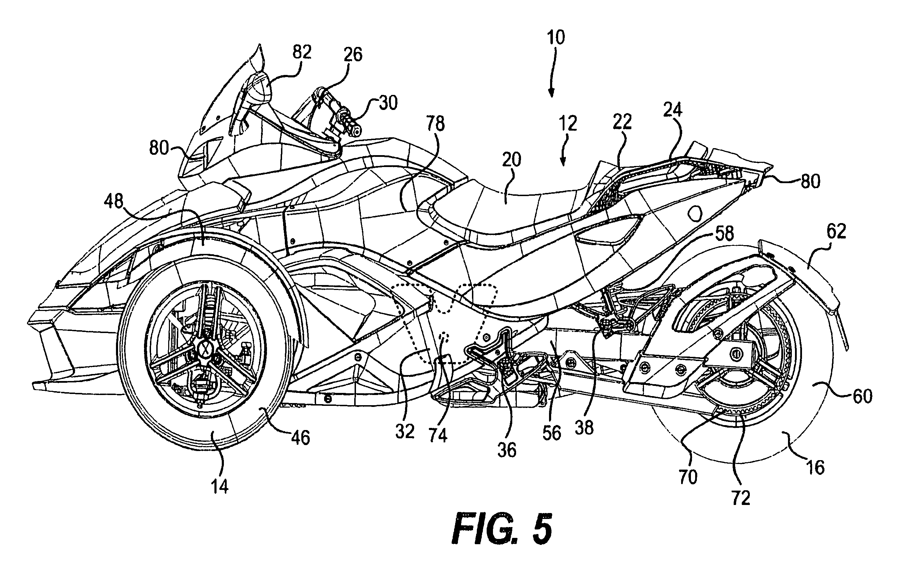

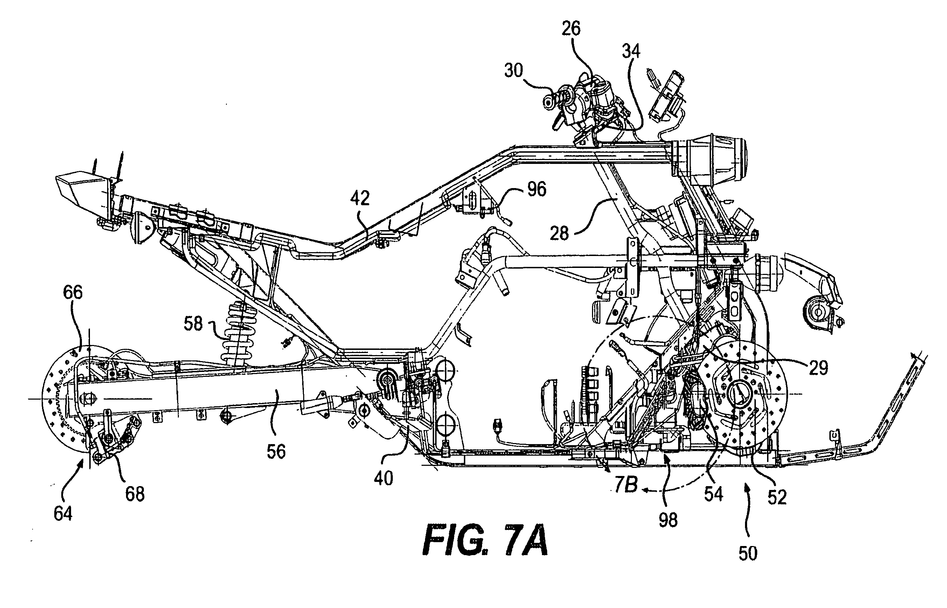

A steering assembly is disposed forwardly of the straddle seat 12 to allow a driver to steer the two front wheels 14. The steering assembly has handlebars 26 connected to a steering column 28 (Fig. 7A). The steering column 28 is connected to the two front wheels 14 via a steering linkage (not shown), such that turning the handlebars 26 turns the steering column 28 which, through the steering linkage, turns the wheels 14. The steering assembly can optionally be provided with a power steering unit 29 (Fig. 7A) which facilitates steering of the vehicle 10. The handlebars 26 are provided with handles 30 for the driver to hold. The right handle 30 can twist and acts as the throttle controller for the engine 32 (shown schematically and in phantom in Fig. 5). It is contemplated, that the throttle could also be controlled by a separate lever disposed near one of the handles 30. A brake lever, in the form of a hand brake lever 34, is provided near the right handle 30 for braking the vehicle 10, as will be explained in greater details below. As seen in the figures, the hand brake lever 34 is provided generally forwardly of the right handle 30 so as to be actuated by multiple fingers of a user, however, it is contemplated that the hand brake lever 34 could be provided generally forwardly of the left handle 30. Other types of brake levers commonly known to those skilled in the art are also contemplated.

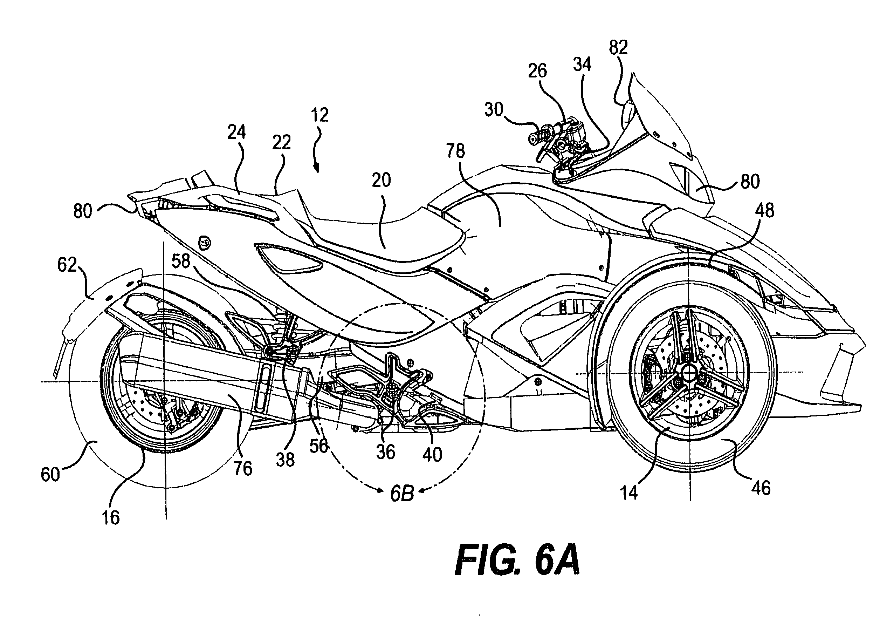

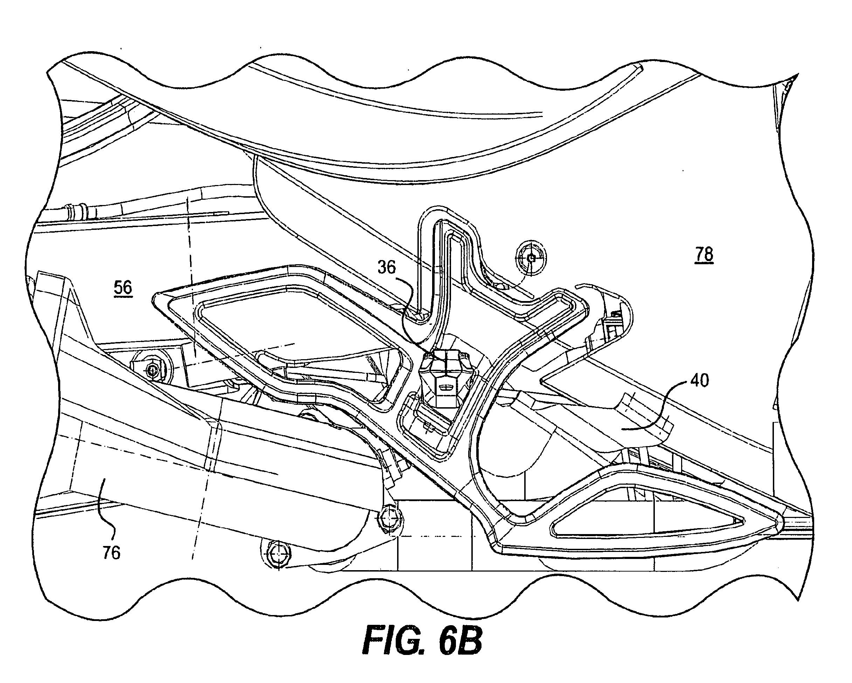

A pair of driver foot pegs 36 are provided on either sides of the vehicle 10 below the first portion 20 of the straddle seat 12 for a driver to rest his feet thereon. Similarly a pair of passenger foot pegs 38 are provided on either sides of the vehicle 10 below the second portion 22 of the straddle seat 12 for a passenger to rest his feet thereon. Another brake lever, in the form of a foot brake lever 40, is provided on a right side of the vehicle 10 below the first portion 20 of the straddle seat 12 for braking the vehicle 10, as will be explained in greater details below. As best seen in Fig. 6B, the foot brake lever 40 is preferably provided near the right driver foot peg 36 such that the driver can actuate the foot brake lever 40 while a portion of his foot remains on the right driver foot peg 36. The foot brake lever 40 also preferably pivots about an axis which is coaxial with the right driver foot peg 36 in order to facilitate actuation of the foot brake lever 40 by the driver.

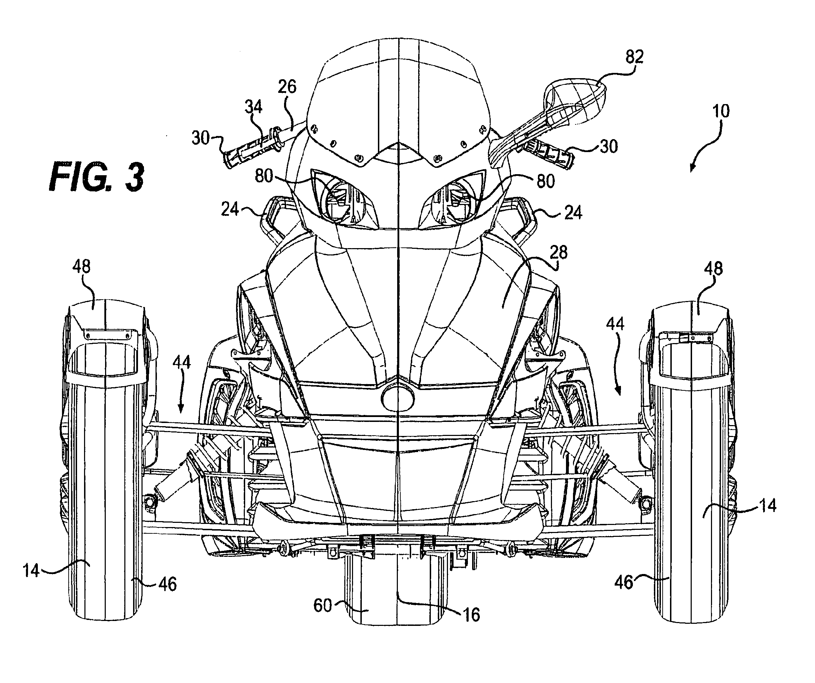

Each of the two front wheels 14 is mounted to the frame 42 (Fig. 7A) of the vehicle 10 via a suspension assembly 44. The suspension assembly 44 is preferably a double A-arm suspension, as best shown in Figs. 2 and 3, but it is contemplated that other types of suspensions could be used, such as a McPherson suspension. As previously mentioned, the front wheels 14 are steered via a steering assembly. Each of the two front wheels 14 has a tire 46 thereon which is suitable for road use. The tires 46 are preferably inflated to a pressure between 138 kPa and 345 kPa. A fairing 48 is disposed over each tire 46 to protect the driver from dirt and water which can be lifted by the tire 46 while it is rolling. Each of the two front wheels 14 is also provided with a brake 50. As best seen in Fig. 7A, the brake 50 is preferably a disc brake mounted onto a wheel hub of each wheel 14, however other types of brakes are contemplated. The brakes 50 each have a rotor 52 mounted onto the wheel hub and a stationary caliper 54 straddling the rotor 52. The brake pads (not shown) are mounted to the caliper 54 so as to be disposed between the rotor 52 and the caliper 54 on either sides of the rotor 52. By applying hydraulic pressure to a piston (not shown) inside the caliper 54, as will be discussed in greater details below, the brake pads squeeze the rotor 52 which, through friction, brakes the wheel 14.

The rear wheel 16 is mounted to the frame 42 via a swing arm 56. The swing arm 56 preferably has two arms pivotally mounted at a front thereof to the frame 42 and between which the rear wheel 16 is rotatably mounted at the rear of the two arms. A shock absorber 58 is disposed between the swing arm 56 and the frame 42. The rear wheel 16 has a tire 60 thereon which is suitable for road use. Preferably, the tire 60 is wider than the tires 46. It is contemplated that the tire 60 could have a smaller width or the same width as the tires 46. It is also contemplated that the rear wheel 16 could have two or more tires disposed next to each other thereon. The tire 60 is preferably inflated to a pressure between 138 kPa and 345 kPa. A fairing 62 is disposed over the tire 60 to protect the driver from dirt and water which can be lifted by the tire 60 while it is rolling. The rear wheel 16 is provided with a brake 64. As best seen in Fig. 7A, the brake 64 is preferably a disc brake mounted to a right side of wheel 16, however other types of brakes are contemplated. The brake 64 has a rotor 66, caliper 68, brake pads (not shown), and a piston (not shown) similar to those used with brakes 50. The brake 64 brakes the rear wheel 16 in the same way as the brakes 50 brake the front wheels 14. A wheel sprocket 70 is mounted to a left side of the rear wheel 16. A belt 72 is disposed about the wheel sprocket 70 and an engine sprocket (not shown) to transmit power from the engine 32 to the rear wheel 16. The engine sprocket is disposed about the output shaft 74 (shown schematically in Fig. 5) of the engine 32. The output shaft 74 extends horizontally and perpendicularly to the longitudinal centerline 18 of the vehicle 10. It is contemplated that a continuously variable transmission (CVT) could be provided between the output shaft 74 and the engine sprocket.

Many other components not specifically described in this application are mounted to the frame 42 to permit proper operation of the vehicle 10. Examples of these components are an air box, radiators, fuel tank, oil tank, and a battery. An exhaust pipe 76 extending on the right side of the vehicle 10 towards the rear thereof is attached to an exhaust port (not shown) of the engine 32 to improve engine performance and to reduce the noise level of the engine 32. A vehicle body 78 is attached to the frame 42 in order to protect the components mounted to the frame 42 from the elements and to make the vehicle 10 aesthetically pleasing. Components necessary to make vehicle 10 suitable for road use, such as lights 80 and a rear view mirror 82, are mounted to the vehicle body 78.

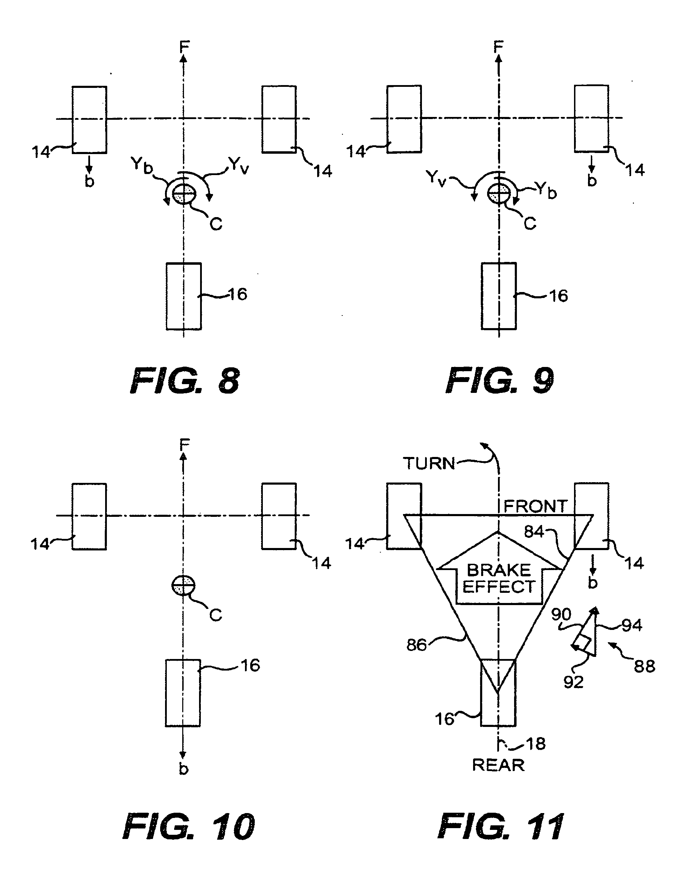

As previously discussed, vehicles such as the one illustrated in Figs. 1-6A are intrinsically less stable than a four-wheeled vehicle. However, as illustrated schematically in Figs. 8 to 10, it is possible to counteract the instability causing forces applied to the vehicle 10 when turning or when one of the wheels 14, 16 slips for example. As illustrated in Fig 8, a clockwise yaw moment Yᵥ about the center of mass C which induces either an oversteer or an understeer condition can be counteracted by a braking force applied to the front left tire 14 to create a force vector *b*. The braking force *b* generates a counter-clockwise braking yaw moment Y_{b} to counteract the vehicle's yaw moment Yᵥ. As illustrated in Fig. 9, a counter-clockwise yaw moment Yᵥ inducing either an oversteer or an understeer condition can be counteracted by a braking force applied to the front right tire 14 to create a force vector *b* generating a clockwise braking yaw moment Y_{b} that counteracts the vehicle's yaw moment Yᵥ. As Fig. 10 illustrates, a braking force applied to the rear tire 16, which creates a force vector *b*, does not generate a significant braking yaw moment in either clockwise or counter-clockwise directions. (However, as would be appreciated by those skilled in the art, if the vehicle is provided with a wide rear tire 16, the force vector *b* may generate a comparatively small braking yaw movement Y_{b} of the type illustrated in Figs. 8 and 9.)

One feature of a three-wheeled vehicle, such as the vehicle 10, that differs from a four-wheeled vehicle results from the triangular shape of the three-wheeled vehicle. In particular, the triangular shape establishes roll axes 84, 86 that are not parallel to the longitudinal centerline 18 of the vehicle. Fig. 11 provides a schematic diagram of the roll axes 84, 86 for the three-wheeled vehicle 10. Since the roll axes 84, 86 for the three-wheeled vehicle 10 are not parallel to the longitudinal centerline 18 of the vehicle 10, if a braking force *b* is established by the right front tire 14 while the vehicle 10 is turning left, as shown in Fig. 11, the braking force *b* will have an effect on the vehicle 10 that is explained by the vector diagram 88. As shown, the braking force *b* will have a first force component 90 that is parallel to the roll axis 84 and a second force component 92 that is perpendicular to the first force component 90 and the roll axis 84. The second force component 92, tends to counteract the tendency for the vehicle 10 to rollover while turning by generating a torque around roll axis 84. The resultant force 94 generates a torque around a transverse axis passing through the center of gravity of the vehicle 10. This has the effect of adding more weight on the front wheels 14 thus making them harder to lift form the ground. Should the vehicle 10 turn right, the same corrective effect could by achieved by applying a braking force *b* to the left wheel 14. This corrective effect cannot be established by a four-wheeled vehicle because the roll axes are parallel to the longitudinal centerline of the four-wheeled vehicle.

Although it may be possible for a driver to manually obtain this corrective effect by applying the correct braking force to the correct wheel, it would be very difficult for the driver to assess the proper amount of braking force to be applied. Should the driver apply the braking force to the incorrect wheel, then the result would increase the instability of the vehicle 10. Current systems brake the wheels evenly for that very reason. Also, the reaction time of the typical driver is too slow to achieve proper control. For these reasons, the vehicle 10 is provided with an electronic stability system (ESS).

The ESS uses an electronic control unit (ECU) (not shown). The ECU is responsible for electrical, electronic and closed loop control functions, including power supply to system sensors, recording operating conditions, converting, manipulating, and transmitting data, and network linkage to other controllers if desired. The ECU receives inputs from various sensors located on the vehicle 10 and other vehicle operating systems. The sensors can include, but are not limited to, a steering sensor, an acceleration sensor, a roll rate sensor, a pitch rate sensor (all not shown), and a yaw sensor 96 (Fig. 7A). Each sensor senses an operating condition of the vehicle 10 for which it was designed and sends a corresponding operating condition signal to the ECU. The ECU processes the operating condition signals and outputs signals to various control units. For example, one control unit is responsible for limiting the speed of the vehicle 10 when turning. Another control unit, the electronic brake control unit 98 (Fig. 7A) which is mounted to the frame 42, is responsible for controlling actuation of the front brakes 50 and rear brake 64, as will be described in greater details below. If the control units determine that the value of the signals deviate from a normal operating condition, meaning that they are outside of a predetermined range, they will actuate or control their respective systems. Alternatively, it is contemplated that the determination could be made by the ECU itself. It is contemplated that the electronic brake control unit could be combined with the ECU as a single unit.

Based on the operating condition signals, the electronic brake control unit 98 will determine which of the brakes 50, 64 need to be actuated to maintain vehicle stability. For example, if a clockwise yaw moment Yᵥ, as in Fig. 8, is sensed by the yaw sensor 96 and the yaw moment Yᵥ is determined to be outside of a predetermined range, the brake control unit 98 causes the front left wheel 14 to brake. It should be noted that the electronic brake control unit 98 may also brake more than one wheel 14, 16 by applying different braking forces to each of the wheels 14, 16. For example, in the condition illustrated in Fig. 11, the electronic brake control unit 98 can control actuation of the two front brakes 50 such that more braking force is applied to the wheels 14 by the brake 50 which is located on a side of the vehicle 10 opposite that of a direction of turning, which in the case of a left turn would be the front right brake 50.

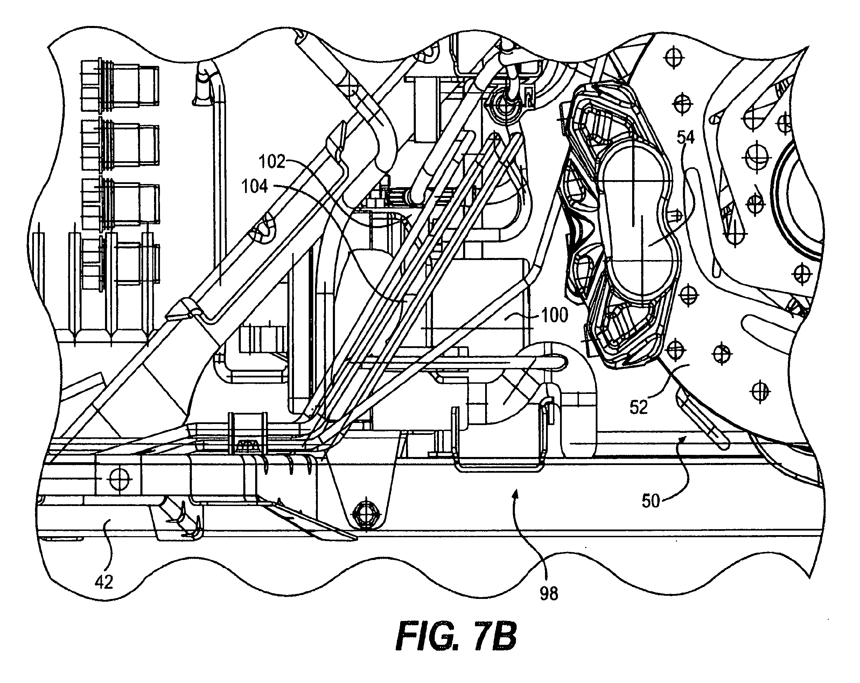

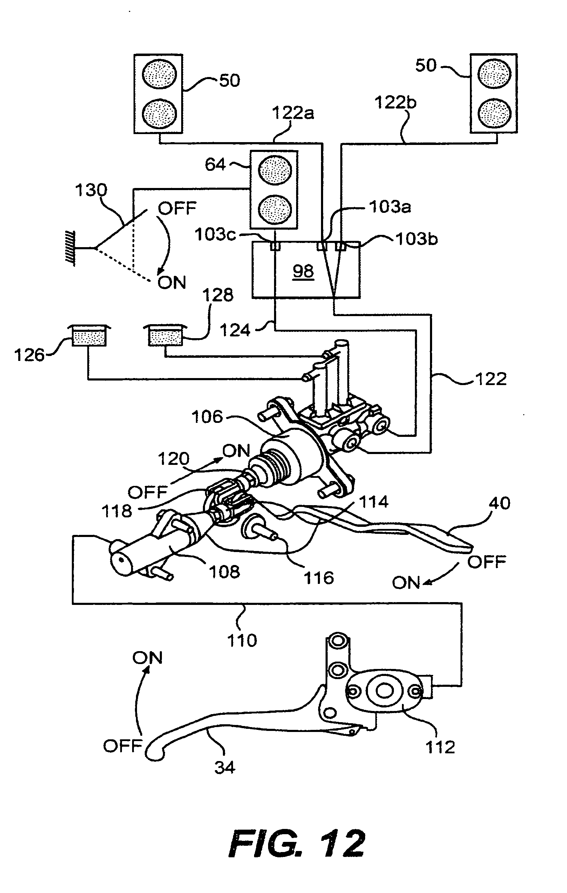

As best seen in Fig. 7B, the electronic brake control unit 98 consists of three main elements. The first element is a pump 100 for pumping hydraulic fluid to the brakes 50, 64. The second element is a valve box 102 containing at least three valves 103a to 103c (Fig. 12), one for each of the brakes 50, 64. The valves are preferably solenoid valves which can be opened, closed, and cycled between these two positions. By modifying the speed and duration of the cycling of the valves, the amount of braking force applied by a brake 50, 64 can be controlled. The third element is an electronic controller 104 for receiving the operating condition signal and controlling actuation of the valves and pump 100 according to the operating condition signal.

The construction of the electronic brake control unit 98 allows it to control actuation of the brakes 50, 64 it two ways. The first way consists in regulating the flow of hydraulic fluid to the brakes 50, 64 when the hand or foot brake lever 34, 40 is actuated, as will be explained in greater details below. The second way consists in actuating the brakes 50, 64 in response to the operating condition signal even when neither of the hand and foot brake levers 34, 40 have been actuated. This is achieved by actuating the pump 100 to pressurize hydraulic fluid and using that fluid to actuate the brakes 50, 64. It is contemplated that the pump 100 could be used to boost hydraulic pressure in the braking system when the hand or foot brake 34, 40 is actuated as well.

As previously mentioned, some people may consider the vehicle 10 to be similar to a motorcycle, which typically has a hand actuated brake, while others may consider it to be similar to an automobile, which usually has a foot actuated brake, and may thus like to brake the vehicle 10 with the corresponding brake lever type. Therefore, on a three-wheeled vehicle 10 having a straddle seat 12, different people may have different preferences and/or instincts when it comes to the type of actuation for the brakes, which is why the present vehicle 10 has been provided with both a hand brake lever 34 and a foot brake lever 40. However, the electronic brake control unit 98 should preferably be able to control the brakes 50, 64 in the same way regardless of which brake lever 34 or 40 the driver prefers, so as to not increase the complexity of the electronic brake control unit 98.

Fig. 12 schematically illustrates only exemplarily a first embodiment not embodying the principles of the invention of a braking system to be used with the vehicle 10. As can be seen and as will be explained in greater details below, both the hand brake lever 34 and the foot brake lever 40 actuate the same master cylinder 106. The master cylinder 106 is a device which uses two pistons in a single cylinder to supply hydraulic pressure to two circuits and can be adjusted to provide different hydraulic pressure to the two circuits. The master cylinder 106 actuates the brakes 50, 64 through the electronic brake control unit 98 in response to actuation of either of the hand brake lever 34 and the foot brake lever 40. In this embodiment, since it is the master cylinder 106 which actuates the brakes 50, 64, the braking system reacts the same way regardless of which lever 34, 40 is actuated. It is contemplated however that the degree of movement of the hand lever 34 may be different from the degree of movement of the foot brake lever 40 to obtain the same braking force. Also, using one master cylinder 106 allows the electronic braking control unit 98 to operate as if there was only one brake lever even though there are two. Therefore, this type of arrangement does not increase the complexity of the electronic braking control unit 98.

In Fig. 12, the hand brake lever 34 hydraulically communicates with a slave cylinder 108 via brake line 110. The slave cylinder 108 is mounted to the frame 42 of the vehicle 10. A hydraulic brake actuator 112, disposed adjacent to and actuated by the hand brake lever 34, hydraulically actuates the slave cylinder via brake line 110. The slave cylinder 108 is connected to the foot brake lever 40 at a point 114 offset from the pivot point 116 of the foot brake lever 40. The foot brake lever 40 is connected at point 118 to a linkage 120 which, when moved, actuates the master cylinder 106. It is contemplated that the foot brake lever 40 could hydraulically actuate the master cylinder 106 as well.

Therefore, when a rider actuates the hand brake lever 34, it causes the slave cylinder 108 to actuate the foot brake lever 40. The foot brake lever 40 then actuates the master cylinder 106 via linkage 120. It is also contemplated that the hand brake lever 34 could directly mechanically actuate the foot brake lever 40 without the assistance of hydraulic components such as the slave cylinder 108. When a rider actuates the foot brake lever 40, it actuates the master cylinder 106 via linkage 120. Although actuating the hand brake lever 34 actuates the foot brake lever 40, it will be understood by those skilled in the art that actuating the foot brake lever 40 does not actuate the hand brake lever 34 due to the hydraulic nature of the communication between these two components.

The master cylinder 106 hydraulically communicates with the front brakes 50 via brake line 122. The master cylinder 106 also hydraulically communicates with the rear brake 64 via brake line 124, thus creating two independent hydraulic circuits. Keeping the hydraulic communications between the master cylinder 106 and the front and rear brakes 50,64 separate allows the vehicle 10 to brake even if one of the hydraulic circuits fails. For the same reason, the hydraulic fluid is supplied to the master cylinder 106 by two different hydraulic fluid reservoirs 126, 128. The hydraulic fluid reservoir 126 supplies the master cylinder 106 with hydraulic fluid to actuate the front brakes 50. The hydraulic fluid reservoir 128 supplies the master cylinder 106 with hydraulic fluid to actuate the rear brakes 64.

As can be seen in Fig. 12, the brake line 122 enters the electronic brake control unit 98 and is separated into two brake lines 122a, 122b in order to control the brakes 50 individually. The brake line 122a hydraulically communicates with the left brake 50 and the brake line 122b hydraulically communicates with the right brake 50. A valve 103a controls the flow of hydraulic fluid in brake line 122a. A valve 103b controls the flow of hydraulic fluid in brake line 122b. The brake line 124 also enters the electronic brake control unit 98 and a valve 103c controls the flow of hydraulic fluid in brake line 124.

By having the master cylinder 106 actuate the brakes 50, 64 through the electronic brake control unit 98, the electronic control unit 98 can selectively control actuation of the brakes 50, 64 with the valves 103a to 103c. When the master cylinder 106 is actuated by either of the hand brake lever 34 and the foot brake lever 40 and an operating condition signal received by the electronic brake control unit 98 is outside of a predetermined range, which is indicative of an instability of the vehicle 10, the electronic brake control unit 98 controls the valves 103a to 103c to obtain a braking force, as described above, that will provide a corrective effect, thus stabilizing the vehicle. For example, if the electronic brake control unit 98 determines that a braking force needs to be applied to the front left tire 14, as in Fig. 8, the electronic control unit would maintain valve 103a opened to permit hydraulic pressure created by the master cylinder 106 to be transmitted from brake line 122 to brake line 122a to actuate the left brake 50 and would close valve 103b to prevent the right brake 50 from being actuated. Alternatively, the electronic brake control unit 98 may cycle the valves 103a and 103b between opened and closed positions at different rates such that the left brake 50 provides more braking than the right brake 50. Also, if the valves 103a and 103b have intermediate positions between the opened and closed positions, the electronic brake control unit 98 may position the valves 103a and 103b differently such that more hydraulic pressure is applied to the left brake 50 than to the right brake 50. The electronic brake control unit 98 also determines whether the rear wheel 16 needs to be braked and controls the valve 103c accordingly. It is contemplated that pump 100 can be used to boost the hydraulic pressure inside brake lines 122a, 122b, and 124 should the electronic brake control unit 98 determine that the hydraulic pressure provided by the master cylinder 106 is insufficient. When the master cylinder 106 is not actuated and an operating condition signal received by the electronic brake control unit 98 is outside of a predetermined range, which is indicative of an instability of the vehicle 10, the electronic brake control unit causes the pump 100 to be actuated to provide hydraulic pressure to the brakes 50, 64 and the electronic brake control unit controls the valves 103a to 103c, as described above, to correct the instability, thus actuating the brakes independently of the master cylinder 106. The electronic brake control unit 98 only selectively controls actuation of the brakes 50, 64 since if the operating condition signals are within a predetermined range, which indicates that the vehicle 10 is stable, the valves 103a to 103c are opened, and the braking system operates as if the electronic brake control unit 98 were not present.

As seen in Fig. 12, a parking brake lever 130, in the form of either and hand or foot actuated lever, is linked to the rear brake 64, either mechanically or hydraulically. The parking brake lever 130 can actuate the brake 64 independently of the master cylinder 106 to lock the rear wheel 16 in a stationary position when the vehicle 10 is parked. This prevents the vehicle 10 from moving when it is parked.

Although the braking mechanism shown in Fig. 12, which consists of the hand brake lever 34, hydraulic brake actuator 112, slave cylinder 108, foot brake lever 40, and master cylinder 106, is described in use with the electronic brake control unit 98, it is contemplated that it could be used without the electronic brake control unit 98 in some applications, such as in motorcycles for example. For applications where two braking levers, such as a hand and a foot brake lever, are required, the braking mechanism of Fig. 12 provides a solution for applying the same braking forces regardless of which lever is used. Also, by not duplicating components, such as the master cylinder 106, the braking mechanism of Fig. 12 also provides an advantageous system, especially in straddle type vehicles.

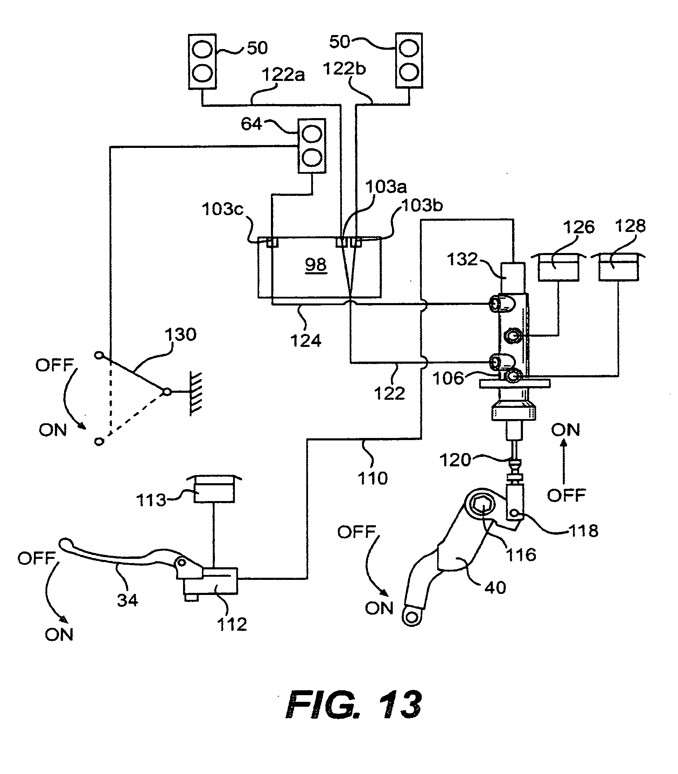

Fig. 13 schematically illustrates a second, only exemplary embodiment not embodying the principles of the invention of a braking system to be used with the vehicle 10. This embodiment differs from the first embodiment shown in Fig. 12 in the way in which the master cylinder 106 is actuated. Therefore like elements have been labeled with the same reference numerals and their operations will not be described again. In the second embodiment, the foot brake lever 40 actuates the master cylinder 106 as in the first embodiment, except that the hand brake 34 is not connected to it. The hand brake lever 34 actuates the hydraulic brake actuator 112, having a hydraulic fluid reservoir 113, which hydraulically communicates, through hydraulic chamber 132, with the master cylinder 106, such that actuating the hand brake lever 34 actuates the master cylinder 106 independently of the foot brake lever 40. It is contemplated that the hand brake 34 could mechanically actuate the master cylinder 106. Once the master cylinder 106 is actuated, the second embodiment operates in the same manner as the first embodiment described above.

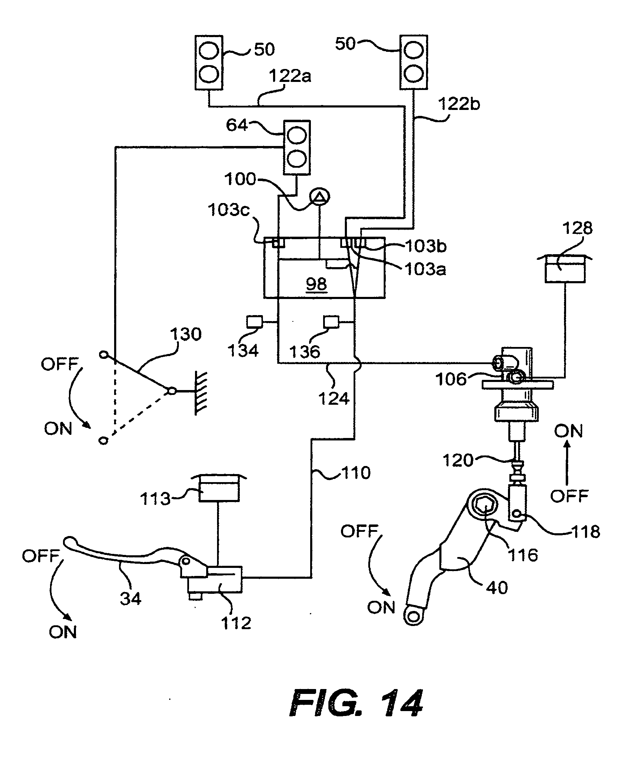

Fig. 14 schematically illustrates an embodiment embodying the principles of the invention of a braking system to be used with the vehicle 10. Once again, like elements have been labeled with the same reference numerals. As illustrated in Fig. 14, the hydraulic brake actuator 112, disposed adjacent to and actuated by the hand brake lever 34, hydraulically actuates the front brakes 50 via brake line 110. The master cylinder 106, actuated by foot brake lever 40, hydraulically actuates the rear brake 64 via brake line 124. It should be noted that the master cylinder 106 now only has a single hydraulic fluid reservoir 128 since it is used for a single hydraulic system. Therefore, according to the invention the hand brake lever 34 actuates only the front brakes 50 and the foot brake lever 40 actuates only the rear brake 64. It is contemplated that the connections to the brakes 50, 64 could be reversed such that the hand brake lever 34 would actuate only the rear brake 64 and the foot brake lever 40 would actuate only the front brakes 50. Since the inputs to the electronic brake control unit 98 are not always from the same hydraulic brake actuator as in the previous embodiment, one pressure sensor is provided for each brake line going through the electronic brake control unit 98. Pressure sensor 134 is provided to sense the hydraulic pressure inside brake line 124 and pressure sensor 136 is provided to sense the hydraulic pressure inside brake line 110. The electronic brake control unit 98 will use the data provided by the sensors 134, 136 to determine which lever has been actuated and control the valves 103a to 103c accordingly, as described above. Should the electronic brake control unit 98 determine that insufficient braking is being applied by either the hand or the foot brake lever 34, 40 to its corresponding brake(s) 50, 64, the pump 100 will be actuated to boost the hydraulic pressure to that (those) brake (s). Also, since each lever 34, 40 only actuates front brakes 50 or the rear brake 64, should the electronic brake control unit 98 determine that braking needs to be applied by the brakes which are not being actuated by the lever the pump 100 will supply hydraulic pressure to those brakes in order to actuate them. For example, if the foot brake lever 40 is being actuated to brake the rear brake 64 and the electronic brake control unit 98 determines that the vehicle 10 is in an unstable condition which needs to be corrected by applying braking from the front brakes 50, then the pump 100 will provide the hydraulic pressure necessary to actuation of the front brakes 50. The valves 103a and 103b will then be controlled by the electronic brake control unit 98 as described above to correct the instability.

## Claims

1. A straddle-type three-wheeled vehicle (10) comprising:
a frame (42);
a straddle seat (12) mounted to the frame (42);
a first wheel (14) mounted to the frame (42) near a first end thereof;
a second wheel (16) mounted to the frame (42) near a second end thereof;
a third wheel (14) mounted to the frame (42) near a first end thereof;
a steering assembly mounted to the frame (42) forwardly of the straddle seat (12) for steering at least one of the wheels (14,16);
an engine (32) mounted to the frame (42) for providing power to at least one of the wheels (14,16);
a first brake (50) for braking the first wheel (14);
a second brake (64) for braking the second wheel (16);
a third brake (50) for braking the third wheel (14);
a first hydraulic brake actuator (112);
a first brake lever (34) for actuating the first hydraulic brake actuator (112);
a second hydraulic brake actuator (106); and
a second brake lever (40) for actuating the second hydraulic brake actuator (106);
the vehicle (10) being **characterized in that** the vehicle (10) further comprises:
an electronic brake control unit (98) in operative communication with the first brake (50), in separate operative communication with the second brake (64), and in separate operative communication with the third brake (50); and
a sensor (96) for sensing an operating condition of the vehicle (10) and in operative connection with the electronic brake control unit (98) for sending an operating condition signal to the electronic brake control unit (98);
the first hydraulic brake actuator (112) hydraulically communicating with the electronic brake control unit (98),
the second hydraulic brake actuator (106) hydraulically communicating with the electronic brake control unit (98),
the first hydraulic brake actuator (112) hydraulically actuating the first brake (50) through the electronic brake control unit (98) in response to actuation of the first brake lever (34),
the second hydraulic brake actuator (106) hydraulically actuating the second brake (64) through the electronic brake control unit (98) in response to actuation of the second brake lever (40),
the first hydraulic brake actuator (112) hydraulically actuating the third brake (50) through the electronic brake control unit (98) in response to actuation of the first brake lever (34),
the electronic brake control unit (98) selectively actuating the first, second and third brakes (50,64) in response to the operating condition signal independently of actuation of first and second hydraulic brake actuators (112,106),
wherein the electronic brake control unit (98) selectively controls actuation of the first, second and third brakes (50,64) in response to actuation of either of the first and second hydraulic brake actuators (112,106) and the operating condition signal,
wherein, of the first and second hydraulic brake actuators (112,106), the first brake lever (34) only actuates the first hydraulic brake actuator (112) and the second brake lever (40) only actuates the second hydraulic brake actuator (106).

2. The vehicle of claim 1, wherein the first brake lever (34) is a hand brake lever mounted to the steering assembly and the second brake lever (40) is a foot brake lever mounted to the vehicle (10) at a location below the straddle seat (12).

3. The vehicle of claim 1 or 2, wherein the first and third wheels (14) are two front wheels, each of the two front wheels being disposed on a different side of a longitudinal centerline (18) of the vehicle (10), and the second wheel (16) is a rear wheel;
wherein the steering assembly steers the two front wheels; and
wherein when the steering assembly steers the two front wheels to turn the vehicle (10), the electronic braking unit (98) controls actuation of the first and third brakes (50) such that more braking is applied by the one of the first and third brakes (50) which is located on a side of the vehicle (10) opposite that of a direction of turning.

## Patentansprüche

1. Dreirädriges Fahrzeug des Grätschtyps (10), umfassend:
einen Rahmen (42);
einen Grätschsitz (12), der am Rahmen (42) angebracht ist;
ein erstes Rad (14), das am Rahmen (42) in der Nähe von einem ersten Enden desselben angebracht ist;
ein zweites Rad (16), das am Rahmen (42) in der Nähe von einem zweiten Enden desselben angebracht ist;
ein drittes Rad (14), das am Rahmen (42) in der Nähe von einem ersten Enden desselben angebracht ist;
eine Lenkbaugruppe, die vor dem Grätschsitz (12) am Rahmen (42) angebracht ist, um wenigstens eines der Räder (14, 16) zu lenken;
einen Motor (32) der am Rahmen (42) angebracht ist, um Kraft an wenigstens eines der Räder (14, 16) bereitzustellen;
eine erste Bremse (50) zum Bremsen des ersten Rades (14);
eine zweite Bremse (64) zum Bremsen des zweiten Rades (14);
eine dritte Bremse (50) zum Bremsen des dritten Rades (14);
ein erstes hydraulisches Bremsstellglied (112);
einen ersten Bremshebel (34) zum Betätigen des ersten hydraulischen Bremsstellglieds (112);
ein zweites hydraulisches Bremsstellglied (106); und
einen zweiten Bremshebel (40) zum Betätigen des zweiten hydraulischen Bremsstellglieds (106);
wobei das Fahrzeug **dadurch gekennzeichnet ist, dass** das Fahrzeug (10) ferner umfasst:
eine elektronische Bremssteuereinheit (98) die in wirksamer Verbindung mit der ersten Bremse (50), in separat wirksamer Verbindung mit der zweiten Bremse (64) und in separat wirksamer Verbindung mit der dritten Bremse (50) steht; und
einen Sensor (96) zum Messen eines Betriebszustands des Fahrzeugs (10), der in wirksamer Verbindung mit der elektronischen Bremssteuereinheit (98) steht, um ein Betriebszustandssignal an die elektronische Bremssteuereinheit (98) zu senden;
wobei das erste hydraulische Bremsstellglied (112) hydraulisch mit der elektronischen Bremssteuereinheit (98) in Verbindung steht,
wobei das zweite hydraulische Bremsstellglied (106) hydraulisch mit der elektronischen Bremssteuereinheit (98) in Verbindung steht,
wobei das erste hydraulische Bremsstellglied (112) die erste Bremse (50) in Reaktion auf die Betätigung des ersten Bremshebels (34) durch die elektronische Bremssteuereinheit (98) hydraulisch betätigt,
wobei das zweite hydraulische Bremsstellglied (106) die zweite Bremse (64) in Reaktion auf die Betätigung des zweiten Bremshebels (40) durch die elektronische Bremssteuereinheit (98) hydraulisch betätigt
wobei das erste hydraulische Bremsstellglied (112) die dritte Bremse (50) in Reaktion auf die Betätigung des ersten Bremshebels (34) durch die elektronische Bremssteuereinheit (98) hydraulisch betätigt,
wobei die elektronische Bremssteuereinheit (98) in Reaktion auf das Betriebszustandssignal selektiv die erste, zweite und dritte Bremse (50, 64) unabhängig vom ersten und zweiten hydraulischen Bremsstellglied (112, 106) betätigt,
wobei die elektronische Bremssteuereinheit (98) in Reaktion auf das Betätigen entweder des ersten oder des zweiten hydraulischen Bremsstellglieds (112, 106) und das Betriebszustandssignal selektiv die Betätigung der ersten, zweiten und dritte Bremsen (50, 64) steuert,
wobei von dem ersten und zweiten hydraulischen Bremsstellglied (112, 106) der erste Bremshebel (34) nur das erste hydraulische Bremsstellglied (112) betätigt und der zweite Bremshebel (40) nur das zweite hydraulische Bremsstellglied (106) betätigt.

2. Fahrzeug nach Anspruch 1, wobei der erste Bremshebel (34) ein Handbremshebel ist, der an der Lenkbaugruppe angebracht ist, und der zweite Bremshebel (40) ein Fußbremshebel ist, der an einer Position unter dem Grätschsitz (12) am Fahrzeug (10) angebracht ist.

3. Fahrzeug nach Anspruch 1 oder 2, wobei das erste und dritte Rad (14) zwei Vorderräder sind, wobei jedes der zwei Vorderräder auf einer anderen Seite einer Längsmittellinie (18) des Fahrzeugs (10) angeordnet ist, und das zweite Rad (16) ein Hinterrad ist;
wobei die Lenkbaugruppe die zwei Vorderräder lenkt; und
wobei die Lenkbaugruppe die zwei Vorderräder lenkt, um das Fahrzeug (10) zu wenden, die elektronische Bremseinheit (98) die Betätigung der ersten und zweiten Bremse (50) derart steuert, dass von derjenigen der ersten und dritten Bremse (50) mehr Bremskraft angewandt wird, die auf einer Seite des Fahrzeugs (10) gegenüber einer Wenderichtung angeordnet ist.

## Revendications

1. Véhicule à trois roues de type à selle (10) comprenant :
un châssis (42) ;
une selle à enfourchement (12) montée sur le châssis (42) ;
une première roue (14) montée sur la châssis (42) proche de la première extrémité de celle-ci ;
une deuxième roue (16) montée sur le châssis (42) proche de la deuxième extrémité de celle-ci ;
une troisième roue (14) montée sur le châssis (42) proche de la première extrémité de celle-ci ;
un ensemble de direction monté sur le châssis (42) en avant de la selle à enfourchement (12) pour diriger au moins une des roues (14,16) ;
un moteur (32) monté sur le châssis (42) pour alimenter au moins une des roues (14,16) ;
un premier frein (50) pour freiner la première roue (14) ;
un deuxième frein (50) pour freiner la deuxième roue (16) ;
un troisième frein (50) pour freiner la troisième roue (14) ;
un premier actionneur de frein hydraulique (112) ;
un premier levier de frein (34) pour actionner le premier actionneur de frein hydraulique (112) ;
un deuxième actionneur de frein hydraulique (106) ; et
un deuxième levier de frein (40) pour actionner le premier actionneur de frein hydraulique (106) ;
le véhicule (10) étant **caractérisé en ce que** le véhicule (10) comprend également :
une unité de commande de frein électronique (98) en communication fonctionnelle avec le premier frein (50), dans une communication fonctionnelle distincte avec le deuxième frein (64), et dans une communication fonctionnelle distincte avec le troisième frein (50) ; et
un capteur (96) permettant de détecter une condition fonctionnelle du véhicule (10) et en connexion fonctionnelle avec l'unité de commande de frein électronique (98) pour l'envoi d'un signal de condition fonctionnelle à l'unité de commande de frein électronique (98) ;
le premier actionneur de frein hydraulique (112) communiquant hydrauliquement avec l'unité de commande de frein électronique (98),
le deuxième actionneur de frein hydraulique (106) communiquant hydrauliquement avec l'unité de commande de frein électronique (98),
le premier actionneur de frein hydraulique (112) actionnant hydrauliquement le premier frein (50) à travers l'unité de commande de frein électronique (98) en réponse à l'actionnement du premier levier de frein (34),
le deuxième actionneur de frein hydraulique (106) actionnant hydrauliquement le deuxième frein (64) à travers l'unité de commande de frein électronique (98) en réponse à l'actionnement du deuxième levier de frein (40),
le premier actionneur de frein hydraulique (112) actionnant hydrauliquement le troisième frein (50) à travers l'unité de commande de frein électronique (98) en réponse à l'actionnement du premier levier de frein (34),
l'unité de commande de frein électronique (98) actionnant sélectivement le premier, deuxième et troisième freins (50,64) en réponse au signal de condition de fonctionnement indépendamment de l'actionnement du premier et du deuxième actionneurs du frein hydraulique (112,106),
dans lequel l'unité de commande de frein électronique (98) commandant sélectivement l'actionnement du premier, deuxième et troisième freins (50,64) en réponse à l'actionnement de soit le premier soit le deuxième actionneurs du frein hydraulique (112,106) et du signal de la condition de fonctionnement,
dans lequel, le premier et le deuxième actionneurs de frein hydraulique (112,106), le premier levier de frein (34) n'actionne que le premier actionneur de frein hydraulique (112) et le deuxième levier de vitesse (40) n'actionne que le deuxième actionneur de frein hydraulique (106).

2. Véhicule de la revendication 1, dans lequel le premier levier de frein (34) est un levier de frein à main monté sur l'ensemble de direction et le deuxième levier de frein (40) est un levier d'une pédale de frein monté sur le véhicule (10) à un emplacement en-dessous de la selle à enfourchement (12).

3. Véhicule de la revendication 1 ou 2, dans lequel la première et la troisième roues (14) sont deux roues avant, chacune des deux roues avant étant agencée sur un côté différent d'une ligne centrale longitudinale (18) du véhicule (10), et la deuxième roue (16) est une roue arrière ;
dans lequel l'ensemble de direction dirige les deux roues avant ; et
dans lequel lorsque l'ensemble de direction dirige les deux roues avant permettant de tourner le véhicule (10), l'unité de frein électronique (98) commandant l'actionnement du premier et du troisième freins (50) de sorte que plus de force de freinage est appliquée par l'un du premier et du troisième freins (50) qui est situé sur le côté du véhicule (10) à l'opposé de la direction du braquage.
